Europäisches Patentamt

European Patent Office

Office européen des brevets

(19)

(11) Publication number: **0 128 710**
**B1**

(12) **EUROPEAN PATENT SPECIFICATION**

(45) Date of publication of patent specification: **29.03.89**

(51) Int. Cl.⁴: **B 29 C 41/04, B 29 C 41/36**

(21) Application number: **84303687.2**

(22) Date of filing: **01.06.84**

(54) Mold loading method and apparatus.

(30) Priority: **03.06.83 US 500760**

(43) Date of publication of application:
**19.12.84 Bulletin 84/51**

(45) Publication of the grant of the patent:
**29.03.89 Bulletin 89/13**

(84) Designated Contracting States:
**DE FR GB IT SE**

(56) References cited:
**FR-A-1 131 153**
**FR-A-1 560 675**
**FR-A-2 068 150**
**FR-A-2 387 754**
**GB-A-1 159 327**
**GB-A-1 174 559**

(73) Proprietor: **DAVIDSON TEXTRON INC**
**Industrial Park**
**Dover New Hampshire 03820 (US)**

(72) Inventor: **Wersosky, John M.**
**44 Bellamy Road**
**Dover New Hampshire 03820 (US)**

(74) Representative: **Gibson, Stewart Harry et al**
**URQUHART-DYKES & LORD Business**
**Technology Centre Senghennydd Road**
**Cardiff CF2 4AY South Wales (GB)**

## Description

Background of the Invention

This invention relates to a process and apparatus for the manufacture of thin-walled articles from a powdered thermoplastic and more particularly to the manufacture of such articles by use of a re-claiming and make-up powder supply and associated method and means for uniform distribution of thermoplastic powder against a heated mold surface which causes the powder to become fused.

GB—A—1 174 559 discloses a process for molding a thin walled hollow plastic part, comprising the steps of heating an open-ended mold to a temperature near the fusing temperature of a powder thermoplastic material while locking a powder charge box to the mold with its open end in register to form a closed system, thereafter rotating the locked charge box and mold until the charge box is located vertically above the mold, and causing a powder charge from the powder charge box to flow under gravity into the mold cavity to build up a skin on the walls of the mould.

GB—A—1 174 559 further discloses an apparatus for molding a thin-walled hollow plastic part in a heated openended mold from a charge of thermoplastic powder material in an open-ended charge box, said apparatus comprising means for joining a heated mold and charge box in open-ended relationship and means for rotating the joined mold and charge box together so as to locate the charge box in vertical overlying relationship to the open end of the heated mold.

The process and apparatus of GB—A—1 174 559 do however expose certain regions of the mold to greater quantities of the powder and as a result such surfaces of the mold will have a thicker build-up of plastic formed thereon.

Summary of the Invention

In accordance with this invention, the aforesaid process is characterised by the steps of sealing the interior of the mold from the interior of the charge box prior to rotating the locked charge box and mold, and of releasing the powder charge after said rotating step, so that the powder charge flows by gravity evenly through the full width and length of the open end of the mold.

Also in accordance with this invention, the aforesaid apparatus is characterised by valve means operative during said rotation to hold the powder charge in the charge box until the open end thereof is in full vertical overlying relationship to the open end of the heated mold, and means for operating said valve means to cause the powder charge to flow by gravity evenly through the full width and length of the open end of the mold so as to produce a uniform buildup of a skin of desired shape and size on the mold.

In the process and apparatus in accordance with this invention, the powder is distributed evenly over the heated surfaces of the mold so as to produce a uniform, thin coating of molded plastic over these surfaces.

In a preferred embodiment the mold is pivotally supported on a frame and the charge box is selectively moved beneath the mold and coupled to the mold for concurrent rotation therewith on the frame. The charge box has a plurality of louvers at an open end thereof selectively open and closed to control flow of powder from the mold during rotation of the box to a vertically upper position for an even gravity flow distribution of a powder charge from the box into the mold so as to produce a uniform thin build-up of plastic particles on heated surfaces of the mold. The charge box further includes a longitudinal bar type air jet system operable when the charge box is in a receiver position for gravity flow return of excess powder from the mold to the charge box for use in a subsequent mold fill cycle.

Other objects and advantages and a more complete understanding of the invention will be apparent to those skilled in the art from the succeeding detailed description of the invention and the accompanying drawings thereof.

Brief Description of Drawings

Figures 1—6 illustrate steps of an automated powder mold process and apparatus for manufacture of thin walled hollow parts in accordance with principles of the present invention;

Figure 7 is an enlarged side elevational view of mold and charge box components of the system at the Figure 2 step;

Figure 8 is a fragmentary end elevational view of a drive system for louvers to control powder release in accordance with the invention;

Figure 9 is an enlarged fragmentary sectional view taken along the line 9—9 of Figure 7 looking in the direction of the arrows;

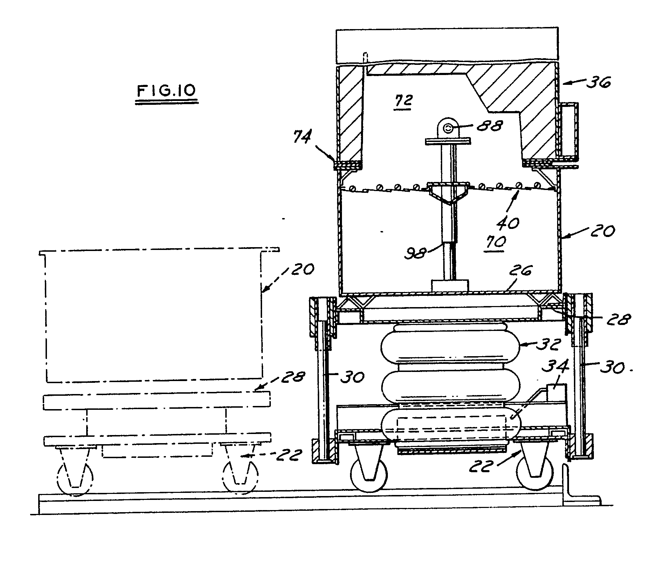

Figure 10 is a vertical sectional view taken along the line 10—10 of Figure 7 with a charge box shown in a side-located fill position;

Figure 11 is a fragmentary sectional view of one embodiment of an air blast drive in the apparatus of the present invention;

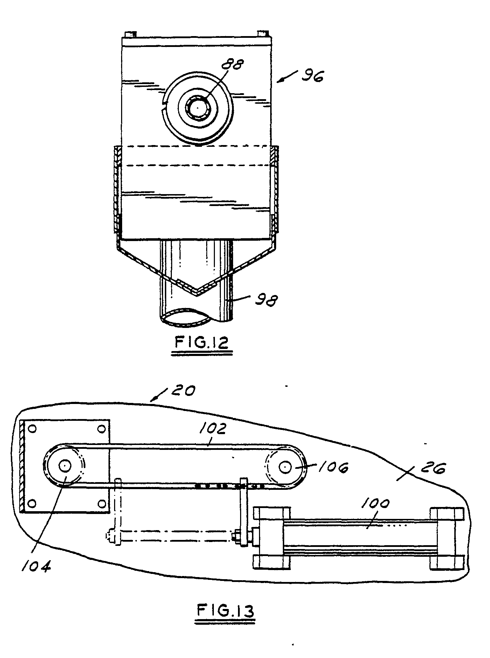

Figure 12 is a sectional view taken along the line 12—12 of Figure 11 looking in the direction of the arrows;

Figure 13 is a sectional view taken along the line 13—13 of Figure 11 looking in the direction of the arrows;

Figure 14 is a side elevational view of another embodiment of a louver system suitable for use in practicing the present invention;

Figure 15 is a fragmentary top elevational view of the louver system of Figure 14; and

Figure 16 is a sectional view taken along line 16-16 Figure 15 looking in the direction of the arrows.

Description of the Preferred Embodiment

The process and apparatus of the present invention will be with reference to the production of plastic thin-walled hollow parts for a typical automotive part such as a skin for an instrument panel crash pad having a length of about 60 inches (1.52m), a surface of approximately 17 square feet (1.57m$^2$) and a volume of about 6900 cubic inches (0,113m$^3$).

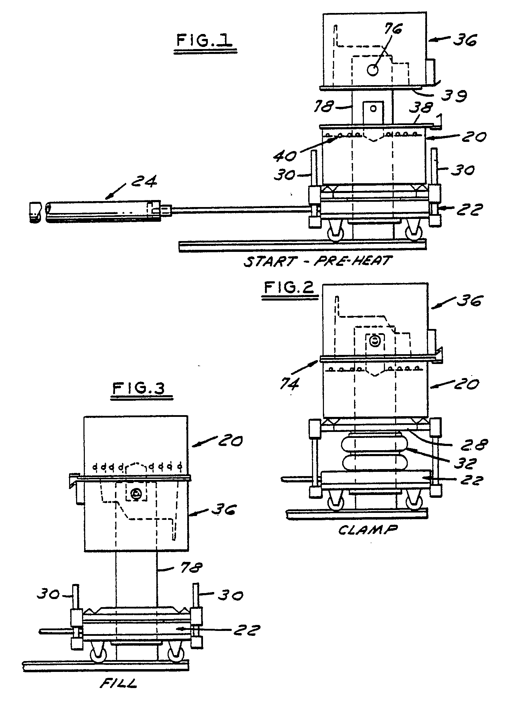

Referring to Figure 1, a start and pre-heat step is shown in an automated powder molding process line which is schematically shown as including a powder charge box 20 mounted on a wheeled cart 22 driven by a hydraulic drive cylinder 24 to the start-pre-heat step position in the process sequence.

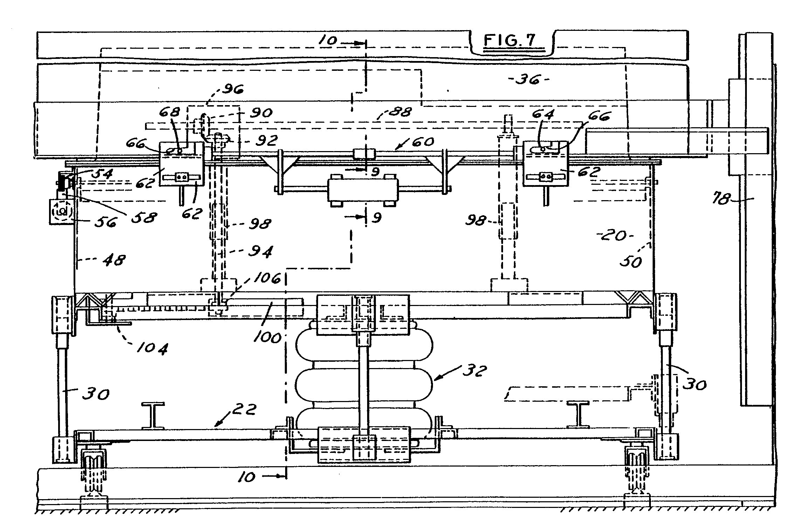

The powder charge box 20 and cart 22 are more detailedly shown in Figures 7—9. As shown, box 20 includes a bottom 26 supported on an elevator platform 28 supported for vertical reciprocation on guide columns 30 fixed at each corner of the cart 22. The platform 28 is driven between raised and lowered positions by a pneumatic bellows-type piston 32 selectively pressurized and deflated by diagramatically illustrated air supply system 34. In the start pre-heat position of Figure 1 the piston 32 is deflated and the platform 28 is in a retracted position on the cart 22 whereby the box 20 is free to move beneath a selectively heated mold 36 of the type set forth in US—A—4,217,325 August 12, 1980 issued to D. Colby. While this patent shows a slush mold system for plastisol, its mold and heating and cooling cycles are representative of those for pre-heating the mold 36 in the process sequence set forth in the start-preheat step of Figure 1.

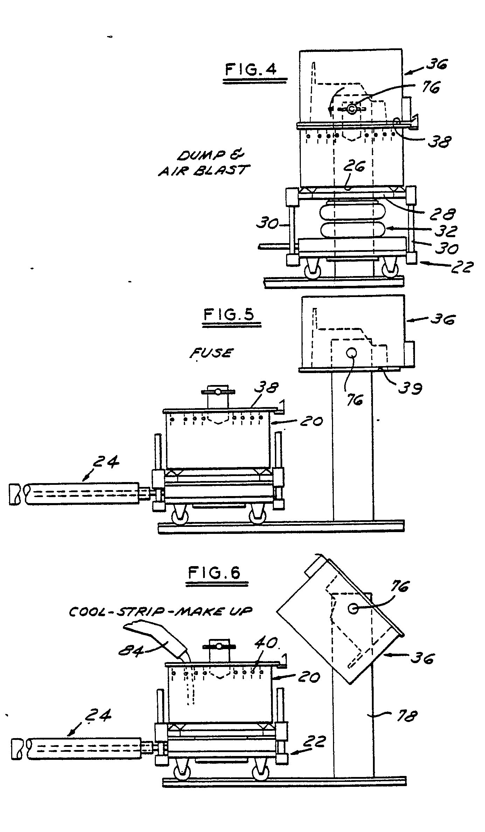

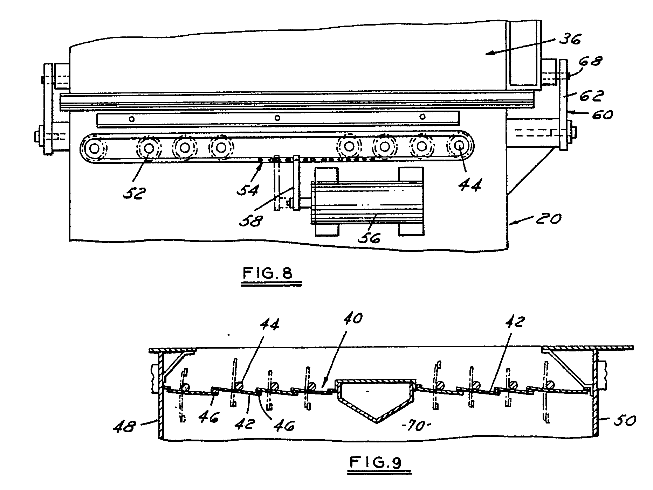

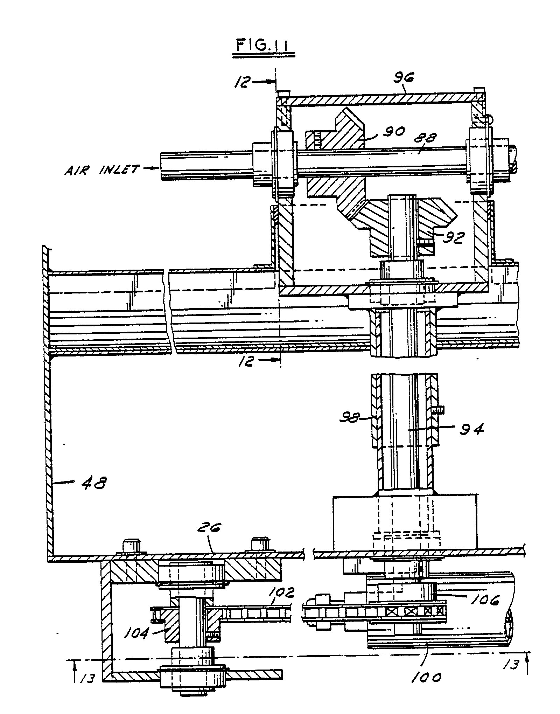

The box 20 further includes an upper open end 38 which is configured to cover the planar extent of a charge opening 39 to mold 36. The open end 38 is opened and closed by a charge control valve 40 for evenly distributing powder from box into the mold 36 during a fill or mold loading step in which mold 36 and box are disposed as shown in Figure 3. Valve 40, more particularly, includes a plurality of louvers 42, shown in Figure 9, each carried by a rotatable shaft 44. Each louver 42 extends across the length of box 20 and is of a width sufficient to overlap an adjacent louver 42 when the valve 40 is closed. Each louver 42 includes an edge seal 46 which engages the underside of an adjacent louver when closed. The outer louvers 42 have a pair of such seals to seal against the box as well as an adjacent louver 42. Each shaft 44 extends through opposite end walls 48, 50 of the box 20 to rotatably support the louvers 42 on the box 20. One end of each shaft as viewed in Figure 11 is connected to a sprocket 52. A drive chain loop 54 across the sprockets 52 is operated by a suitable drive cylinder 56 connected to loop 54 by link 58. Cylinder 56 is operated by known controls to open and close the louvers.

The box 20 further includes a clamp assembly 60 including spaced clamp plates 62 movably reciprocated on box 20 by a drive cylinder 64. Each plate has a tapered slot 66 that selectively captures or releases a pair of spaced pins 68 on mold 36.

The clamp assembly 60 is closed when the powder charge box 20 is elevated by piston 32 as shown in Figures 2 and 7. At this step of the process the cylinder 64 is pressurized to move plates 62 into a lock position shown in Figure 7.

As a result the interior 70 of box 20 and the interior 72 of mold 36 form a closed system 74 having a powder charge only in interior 70 at start and preheat.

The next process step includes concurrent rotation of the closed system 74 about trunnions 76 on machine frame 78. The closed louvers 42 withhold introduction of the powder until the most favorable orientation of box 20 and mold 36. During rotation the valve assembly 40 remains closed as shown in Figure 9 and the valve assembly 40 only opens once the charge box 20 is located vertically above the mold. At this point a Fill step of the process takes place. In accordance with the invention, the drive cylinder 56 is conditioned to rotate the drive chain loop 54 to cause each louver 42 to assume the dotted line position shown in Figure 9.

As a result a plurality of closely spaced powder feed passages 80 are defined end-to-end and side-to-side of mold charge opening 39 through which thermoplastic powder is distributed evenly throughout the charge opening 39. A resultant even build-up of melted plastic occurs on the heated walls of the mold. In particular, the louvers contribute to a fluidizing effect when they are opened and the powder starts to pour through the openings. While this is happening, the air in the mold must find its way through the powder to replace the void in the box which improves fluidization and eliminates air traps which otherwise occur in nearly 50% of the moldings if the louvers are left open during rotation to fill, and decrease to 0% when louvers are opened after the box has reached the upper position.

Following the Fill step the joined mold 36 and charge box 20 are again rotated so that the mold 36 is located vertically above the box 20.

An air-jet system 82 is then actuated to dislodge excess powder from the walls of the mold. Valve 40 is opened so that the dislodged material will flow by gravity return to the interior 70 of the box through its open end for collection and reuse in the system.

A fuse cycle is then carried out in accordance with known practice for example as set forth in US—A—3,492,307 wherein the molded powder is completely fused into the desired thin walled hollow part. During the fuse step the charge box is unclamped from the inverted mold and the bellows-type piston returns box 20 to the retracted carriage position for return to a make-up position to one side of the mold. Thereafter the mold is cooled and rotated into a strip position shown in Figure 6. Make-up powder is fed through suitable supply means shown as a chute 84 and the valve 40 which is disposed in its open position.

The air jet system 82 is in the form of an oscillating air sweep tube 88. As shown in Figure 11 tube 88 is driven by right angle bevel gears 90, 92 connected to one end of tube 88 and a vertical drive shaft 94. The drive components are covered by box 96 and tube 98 to prevent wear. A hydraulic motor 100 drives a chain loop 102 across sprockets 104, 106 to oscillate the tube 88 so that an air jet covers all surfaces of the mold including ledges, undercuts and other detail shapes found on complex shapes such as automobile crash pads.

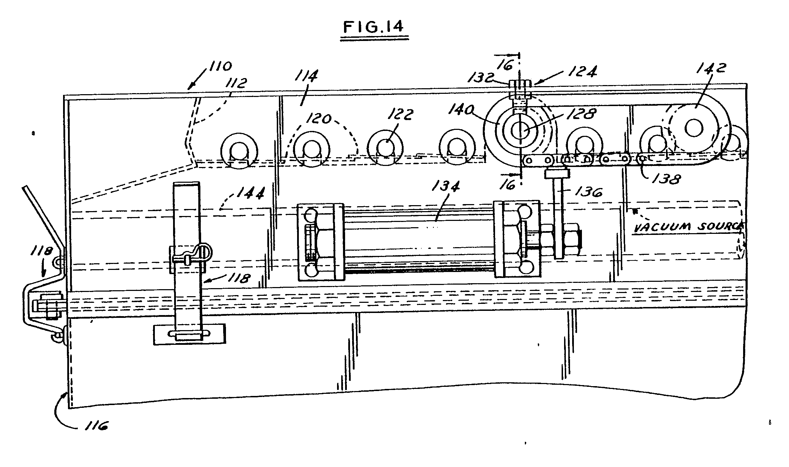

Another embodiment of a louver system is set forth in Figures 14—16. It includes a separate louver rack 110 having side inserts 112 (one shown in Figure 14) to narrow the flow opening 114 through which powder flows from a charge box 116 into a mold (now shown). The rack 110 is connected by a series of spaced clamps 118 to the box 116. Each louver 120 has a shaft 122 pivotally supported by side walls of the rack 110. They are driven by a drive system (not shown) of the type described in the louver drive system shown in Figures 8 and 9.

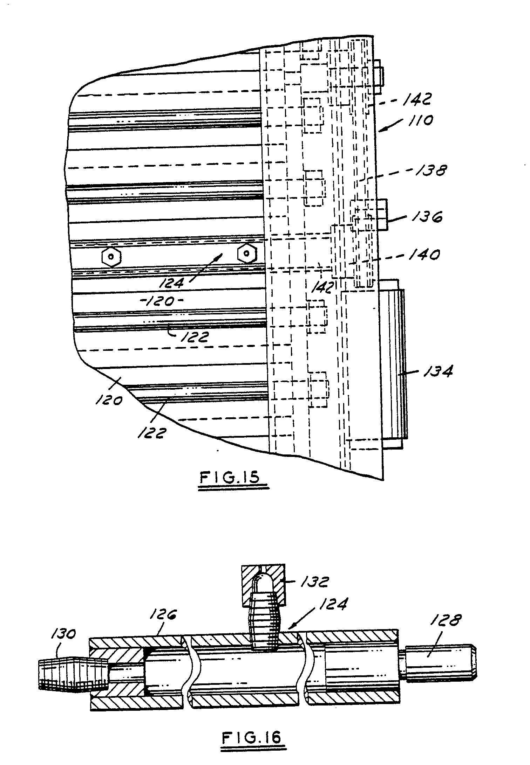

In the embodiment of Figures 14—16 an air jet system 124 is located closely adjacent the opening 114 so as to be directly in line with the peripheral region of a mold connected to the box. The air jet system 124 includes an elongated tube 126 which extends across the width of opening 114. Tube 126 has a journal 128 on one end and an air supply inlet fitting 130 on its opposite end as shown in Figure 16. Individual jets 132 are spaced on the tube 126 along its length to remove excess powder from the mold. Oscillation of tube 126 is produced by a drive motor 134 having its shaft coupled by a link 136 to a drive chain loop 138 that extends across a drive sprocket 140 connected to the outboard end 142 of tube 126 and an idler sprocket 144.

Examples of suitable processes are set forth below. The method of mold temperature control is by oil heating and cooling flow as set forth in US—A—4,217,325. Suitable thermoplastic powders are plasticized polyvinyl chlorides and related vinyl resins in dry powder form for ease of gravity flow passage through valve passages 80 during both fill and return steps. Typical examples of parts, plastic materials and mold processes include the following:

Examples of parts that have been made by the PVC powder molding process include the following.

1. 1978 pontiac Grand Prix crash pad shell
2. 1982 Volkswagen crash pad shell.

Volume of each mold was approximately four cubic feet.

PVC resin, plasticizer, stabilizer, release agents and color pigments are combined in a high intensity mixer to produce a dry, flowable powder. The process is known in the industry as dry-blending.

The various compound components may be selected as to type and ratio to provide the properties required both for the finished product and for ease of processing. Physical properties will not be too dissimilar from those obtained with liquid plastisol which is also used to manufacture similar products but has an inherent weakness for forming objectionable drips and runs when made in complex shapes.

Processing properties are such that when melting of the plastic powder occurs, densification results in exact reproduction of minute detail such as grain marks and stitches engraved in the mold surface.

Mold preheating temperature may range from 320°F to 390°F (160°C to 199°C). Since the thickness of the finished product is also governed by the time the powder contacts the mold, it should be understood that simultaneous charging of the powder to the mold can be of definite advantage. Also, if certain areas of the mold can be made to have a lower pre-heated temperature than others, it will permit molding a thinner shell in those areas, since both temperature and mold-filled time determine the final thickness of the shell. Therefore, a very flexible range, for mold-filled time, of one second to ten seconds or more has been established.

The powder must contact all areas of the mold that constitute part of the desired finished product. However, since the box can be contoured to match almost any given shape or mold periphery, then additional savings can be gained by reducing the surface area of the mold below that which would be required for liquid plastisol casting.

During the initial portion of the process cycle when the powder is melting to form the shell, and the main body of the powder has been dumped from the mold, there remains on the inner surface of the newly formed shell a certain amount of loosely adherent powder. This loosely adherent powder is nonuniform in thickness over the surface because of caking and packing tendencies of the PVC powder under the influence of relatively moderate heat. If the as-deposited loosely adherent powder is fused, then there will be undesirable variations in thickness. Therefore, before the box is separated from the mold, the air sweep is actuated to blow loose the excess powder. Concurrently, a negative pressure is imposed on the assembly via means such as the vacuum tube 144 shown in Figure 14 to prevent over pressurization and expulsion of the powder into the environment.

The air sweep can operate effectively in the range of 40 to 90 psi (2.75 to 6.20 bars) and at least one oscillation in each direction should be made by the air jet assembly for best results. Each oscillation should not take more than two seconds to complete the full arc of movement and initiation of the air sweep should commence within five seconds after dumping the powder out of the mold. Any delay will cause the excess powder to melt and prevent its being blown free.

Depending on formulation, complete melting or fusion of the PVC powder can occur when mold temperatures reach 375°F to 400°F (190°C to 204°C).

After fusion, the mold is cooled to a temperature which will facilitate removal of the shell without damage.

A typical molding cycle is as follows:

|  | Temperature °F (°C) | Elapsed Time |
| --- | --- | --- |
| Preheat Mold | 360 (182°C) | 1 Min. 10 Sec. |
| Clamp Box to Mold and Fill Mold |  | 1 Min. 10 Sec. |
| Dump Powder |  | 1 Min. 15 Sec. |
| Operate Air Sweep |  | 1 Min. 20 Sec. |
| Disengage Box from Mold |  | 1 Min. 30 Sec. |
| Start Fusion |  | 1 Min. 30 Sec. |
| End Fusion | 395 (201°C) | 2 Min. 30 Sec. |
| Start Cooling |  | 2 Min. 30 Sec. |
| End Cooling | 140 (60°C) | 4 Min. 30 Sec. |
| Strip Shell |  |  |

Specifically the process and apparatus of the present invention enable even and complete distribution of thermoplastic powder material onto mold surfaces to form large, long, thin-walled hollow parts such as automobile crash pads formed during short cycle mold cycles in limited plant floor space.

## Claims

1. A process for molding a thin walled hollow plastic part, comprising the steps of heating an open-ended mold (36) to a temperature near the fusing temperature of a powder thermoplastic material while locking a powder charge box (20) to the mold with its open end in register to form a closed system, thereafter rotating the locked charge box and mold until the charge box is located vertically above the mold, and causing a powder charge from the powder charge box to flow under gravity into the mold cavity to build up a skin on the walls of the mold, characterised by the steps of sealing the interior of the mold (36) from the interior of the charge box (20) prior to rotating the locked charge box and mold, and of releasing the powder charge after said rotating step, so that the powder charge flows by gravity evenly through the full width and length of the open end of the mold.

2. A process as claimed in claim 1, characterised in that the release of powder charge comprises distributing the powder charge as a plurality of streams from end-to-end and side-to-side of the open end of the mold box so as to uniformly distribute the powder charge against heated surfaces of the mold.

3. A process as claimed in claim 2, characterised in that the step of sealing the interior of the mold (36) from the interior of the charge box (20) comprises closing a set of louvers (42) having seals (46) thereon.

4. An apparatus for molding a thin-walled hollow plastic part in a heated open-ended mold from a charge of thermoplastic powder material in an open-ended charge box, said apparatus comprising means (60, 62) for joining a heated mold (36) and charge box (20) in open-ended relationship and means for rotating the joined mold and charge box together so as to locate the charge box in vertical overlying relationship to the open end of the heated mold, characterised by valve means (40) operative during said rotation to hold the powder charge in the charge box until the open end thereof is in full vertical overlying relationship to the open end of the heated mold, and means for operating said valve means to cause the powder charge to flow by gravity evenly through the full width and length of the open end of the mold so as to produce a uniform build-up of a skin of desired shape and size on the mold.

5. An apparatus as claimed in claim 4, characterised in that said valve means (40) includes a plurality of louvers (42), means (46) in association with said louvers for forming a sealed overlapping barrier against passage of powder from the charge box, and means for aligning said louvers in spaced parallel relationship

EP 0 128 710 B1

to form a plurality of powder flow paths for even, vertical gravity flow of powder from the charge box from side-to-side and end-to-end of the open end of the mold during a thermoplastic fill step.

6. An apparatus as claimed in claim 4 or 5, characterised by air sweep means (82) located on said charge box for directing air jets against loosely adherent powder on the mold surface for releasing such powder for gravity return to the charge box through the open valve means when the charge box and mold are reinverted, and vacuum means to maintain a negative pressure in said charge box to prevent over pressurization and expulsion of returned powder from said charge box.

## Patentansprüche

1. Verfahren zum Formen eines dünnwandigen Kunststoffteils, das die Schritte aufweist, eine Form (36) mit einem offenen Ende bis auf eine Temperatur nahe der Erweichungstemperatur eines pulverförmigen Kunststoffmaterials zu erhitzen, während ein Pulverbeschickungskasten mit ausgerichtetem offenen Ende an der Form fixiert wird, um ein geschlossenes System zu bilden, anschließend den fixierten Beschickungskasten und die Form zu drehen, bis der Beschickungskasten vertikal über der Form angeordnet ist, und Pulverbeschickung vom Pulverbeschickungskasten zu bewirken, so daß Pulver unter Schwerkräfteinwirkung in den Formhohlraum strömt, um eine Schicht auf den Wänden der Form zu bilden, gekennzeichnet durch die Schritte, das Innere der Form (36) vom Inneren des Beschickungskastens (20) vor dem Drehen des fixierten Beschickungskastens und der Form abzudichten, und die Pulverladung nach dem Drehschritt freizugeben, so daß die Pulverladung unter Schwerkrafteinwirkung gleichmäßig über die volle Breite und Länge des offenen Endes der Form strömt.

2. Verfahren nach Anspruch 1, dadurch gekennzeichnet, daß das Freigeben der Pulverladung den Schritt einschließt, die Pulverladung als eine Vielzahl von Strömen von einem Ende bis zum anderen und von einer Seite bis zur anderen des offenen Endes des Formkastens freizugeben, so daß die Pulverladung gegen erhitzte Oberflächen der Form gleichförmig verteilt wird.

3. Verfahren nach Anspruch 2, dadurch gekennzeichnet, daß der Schritt, das Innere der Form (36) vom Inneren des Beschickungskastens (20) abzudichten, ein Schließen eines Satzes von jalousieartig angeordneten Elementen (42) einschließt, auf denen Dichtungen (46) angeordnet sind.

4. Vorrichtung zum Formen eines dünnwandigen Kunststoffteiles in einer erhitzten Form mit einem offenen Ende aus einer Ladung von thermoplastischem Kunststoffmaterial in einem Beschickungskasten mit offenem Ende, wobei die Vorrichtung Mittel (60, 62) zum Verbinden einer erhitzten Form (36) und eines Beschickungskastens (20) unter einer Beziehung mit offenen Enden zu verbinden, und Mittel zum Drehen von verbundener Form und Beschickungskasten zusammen aufweist, so daß der Beschickungskasten in vertikal darüber angeordneter Beziehung zum offenen Ende der erhitzten Form angeordnet ist, gekennzeichnet durch Ventilmittel (40), die während der Drehung wirksam sind, um die Pulverladung in dem Beschickungskasten zu halten, bis das offene Ende desselben vollständig vertikal über dem offenen Ende der erhitzten Form angeordnet ist, und durch Mittel zum Betätigen der Ventilmittel, um zu bewirken, daß die Pulverladung unter Schwerkrafteinwirkung gleichförmig über die volle Breite und Länge des offenen Endes der Form strömt, um so ein gleichförmiges Aufbauen der Schicht gewünschter Form und Größe auf der Form zu bewirken.

5. Vorrichtung nach Anspruch 4, dadurch gekennzeichnet, daß die Ventilmittel (40) eine Vielzahl von jalousieartig angeordneten Elementen (42), Mittel (46), die mit den jalousieartig angeordneten Teilen verknüpft sind, um eine abgedichtete überlappende Sperre gegen Durchgang von Pulver von dem Beschickungskasten zu bilden, und Mittel zum Ausrichten der jalousieartig angeordneten Teile in beabstandeter paralleler Beziehung aufweisen, um eine Vielzahl von Pulverströmungswegen für gleichförmige, vertikale Strömung unter Schwerkrafteinwirkung von Pulver von dem Beschickungskasten von einer Seite bis zur anderern und von einem Ende bis zum anderen des offenen Endes der Form während eines thermoplastischen Befüllungsschritts zu bilden.

6. Vorrichtung nach Anspruch 4 oder 5, gekennzeichnet durch Luftfegemittel (82), die auf dem Beschickungskasten angeordnet sind, um Luftströme gegen lose anhaftendes Pulver auf der · Formoberfläche zu richten, um solches Pulver für Rückkehr unter Schwerkrafteinwirkung in den Beschickungskasten durch die offenen Ventilmittel zu lösen, wenn der Beschickungskasten und die Form wieder umgekehrt worden sind, und durch Vakuummittel um einen Unterdruck in dem Beschickungskasten aufrechtzuerhalten, um Aufbau von Überdruck und Ausstoß von zurückgeführtem Pulver aus dem Beschickungskasten zu verhindern.

## Revendications

1. Procédé pour mouler une pièce creuse en plastique à paroi mince, comprenant les étapes de chauffer un moule à extrémité ouverte (36) à une température proche de la température de fusion d'une matière thermoplastique en poudre tout en bloquant un caisson de charge de poudre (20) sur le moule avec son extrémité ouverte en correspondance pour former un système fermé, en faisant tourner ensuite le caisson bloqué de charge et le moule jusqu'à ce que le caisson de charge soit placé verticalement au-dessus du moule et en forçant une charge de poudre du caisson de charge de poudre à s'écouler sous la gravité dans la cavité du moule pour former une peau sur les parois du moule, caractérisé par les étapes

6

EP 0 128 710 B1

d'étanchéifier l'intérieur du moule (36) à partir de l'intérieur du caisson de charge (20) avant de faire tourner le caisson de charge et le moule bloqués et de libérer la charge de poudre après ladite étape de rotation de manière que la charge de poudre s'écoule par gravité régulièrement sur toute la largeur et la longueur de l'extrémité ouverte du moule.

2. Procédé selon la revendication 1, caractérisé en ce que la libération de la charge de poudre consiste à distribuer la charge de poudre sous la forme d'un certain nombre de courants d'un bout à l'autre et d'un côté à l'autre de l'extrémité ouverte du caisson du moule afin de distribuer uniformément la charge de poudre contre les surfaces chauffées du moule.

3. Procédé selon la revendication 2, caractérisé en ce que l'étape d'étanchéifier l'intérieur du moule (36) à partir de l'intérieur du caisson de charge (20) consiste à fermer un groupe de volets (42) ayant des joints (46).

4. Dispositif pour mouler une pièce en plastique creuse à paroi mince dans un moule chauffé à extrémité ouverte à partir d'une charge d'une matière en poudre thermoplastique dans un caisson de charge à extrémité ouverte, ledit dispositif comprenant un moyen (60, 62) pour joindre un moule chauffé (36) et un caisson de charge (20) en relation d'extrémité ouverte et un moyen pour faire tourner le moule et le caisson de charge joint ensemble afin de localiser le caisson de charge en relation de recouvrement vertical avec l'extrémité ouverte du moule chauffé, caractérisé par un moyen formant vanne (40) activé pendant ladite rotation pour maintenir la charge de poudre dans le caisson de charge jusqu'à ce que son extrémité ouverte soit en pleine relation de recouvrement vertical avec l'extrémité ouverte du moule chauffé, et un moyen pour faire fonctionner ledit moyen formant vanne pour forcer la charge de poudre à s'écouler par gravité régulièrement sur toute la largeur et toute la longueur de l'extrémité ouverte du moule afin de produire une accumulation uniforme d'une peau d'une forme et d'une taille souhaitées sur le moule.

5. Dispositif selon la revendication 4, caractérisé en ce que ledit moyen formant vanne (40) comprend un certain nombre de volets (42), des moyens (46) en association avec lesdits volets pour former une barrière scellée de recouvrement contre le passage de la poudre du caisson de charge, et un moyen pour aligner lesdits volets en relation parallèle et espacée pour former un certain nombre de trajets d'écoulement de la poudre pour un écoulement régulier, vertical, par gravité de poudre du caisson de charge d'un côté à l'autre et d'un bout à l'autre de l'extrémité ouverte du moule pendant une étape de remplissage thermoplastique.

6. Dispositif selon la revendication 4 ou 5, caractérisé par un moyen (82) de balayage de l'air placé sur ledit caisson de charge pour diriger des jets d'air contre la poudre adhérant librement sur la surface du moule pour libérer cette poudre pour un retour par gravité au caisson de charge à travers le moyen formant vanne qui est ouvert lorsque le caisson de charge et le moule sont réinversés, et un moyen sous vide pour maintenir une pression négative dans ledit caisson de charge pour empêcher un excès de pressurisation et une expulsion de la poudre retournée dudit caisson de charge.

7

EP 0 128 710 B1

FIG.1

*76*

*36*

*39*

*78*    *38*

*20*

*40*

*30*    *30*

*24*

*22*

START - PRE-HEAT

FIG.2

*36*

*74*

*20*

*28*

*32*

*22*

CLAMP

FIG.3

*20*

*36*

*78*

*30*    *30*

*22*

FILL

1

FIG.4

DUMP &
AIR BLAST

FIG.5

FUSE

FIG.6

COOL-STRIP-MAKE UP

FIG.7

FIG. 8

FIG. 9

FIG.10

FIG.11

AIR INLET

6

88    96

98

FIG.12

20

102

106    26

100

104

FIG.13

7

FIG.14

FIG.15

FIG.16